# EUROPÄISCHE PATENTSCHRIFT

(11) **EP 3 100 936 B1**
(45) Veröffentlichungstag und Bekanntmachung des Hinweises auf die Patenterteilung: **19.06.2019**
(21) Anmeldenummer: 16172720.1
(22) Anmeldetag: 02.06.2016
(51) Int. Cl.: B62H 5/00, G01S 19/16, B62H 5/20

(54) **FAHRZEUG MIT TRETKURBELANTRIEB UND ORTUNGSEINHEIT**
VEHICLE WITH A TREAD CRANK DRIVE AND LOCATING UNIT
VEHICULE COMPRENANT UN PEDALIER ET UNITE DE LOCALISATION

(30) Priorität: 05.06.2015 DE 102015108930
(43) Veröffentlichungstag der Anmeldung: 07.12.2016
(73) Patentinhaber: GPS-No.com GmbH, 60386 Frankfurt am Main (DE)
(72) Erfinder: Krechting, Markus Josef, 63477 Maintal (DE)
(74) Vertreter: Albrecht, Ralf

(56) Entgegenhaltungen:
- EP-A1- 3 018 044
- DE-A1-102005 001 209
- DE-A1-102009 033 475
- DE-U1-202005 007 448

## Beschreibung

Die vorliegende Erfindung betrifft ein Fahrzeug, insbesondere Fahrrad, mit einem Rahmen, einem Tretkurbelantrieb, der ein an dem Rahmen gelagertes Tretlager und zwei an dem Tretlager befestigte Tretkurbelarme aufweist, einer Energieversorgungseinrichtung und einer mit dieser verbundenen Ortungseinheit, die einen Bestandteil eines Fahrrad-Diebstahlschutz-Ortungssystems bildet.

Es sind bereits verschiede Ausgestaltungen von mit einer Ortungseinheit versehenen Fahrrädern bekannt. Die Ortungseinheit ist an eine Energieversorgungseinrichtung angeschlossen, welche die erforderliche Energie zum Betreiben der Ortungseinrichtung bereitstellt. Die Ortungseinheit weist normalerweise eine GPS- und GSM-Einrichtung auf, über welche die Positionsdaten des Fahrrads ermittelt und an einen zentralen Rechner eines Fahrrad-Diebstahlschutz-Ortungssystems gesendet werden können. Im Falle eines Diebstahls können dann die aktuellen Positionsdaten des Fahrrads abgerufen werden, um dieses ausfindig zu machen.

So offenbart beispielsweise die DE 10 2005 001 209 A1 ein Fahrrad der eingangs genannten Art, bei dem die Ortungseinheit und die Energieversorgungseinrichtung im Rahmen des Fahrrads positioniert sind. Die Integration dieser Komponenten im Rahmen ist dahingehend von Vorteil, dass sie von außen nicht sichtbar ist, weshalb potentielle Diebe auf diese nicht aufmerksam werden. Darüber hinaus ist die Ortungseinheit von außen unzugänglich, weshalb sie weder entfernt noch zerstört werden kann. Ein Nachteil besteht allerdings darin, dass sich die Komponenten nur während der Herstellung bzw. Montage des Fahrrads im Rahmen montieren lassen. Eine Nachrüstung ist entsprechend problematisch. Darüber hinaus bereit die Energieversorgung aufgrund der unzugänglichen Positionierung der Energieversorgungseinrichtung Probleme. In diesem Zusammenhang wird vorgeschlagen, eine langlebige Batterie zu verwenden. Nach Ablauf der Lebensdauer ist die Ortungseinheit aber nicht mehr einsatzfähig. Alternativ kann ein Akkumulator eingesetzt werden, der beispielsweise beim Betätigen der Pedale oder mittels Solarzellen aufgeladen wird. Dies führt jedoch zu einem sehr komplexen und teuren Aufbau. Ferner lässt sich die Ortungseinheit weder problemlos warten noch austauschen.

Die GB 2 484 273 A beschreibt ein Fahrrad der eingangs genannten Art, bei dem die Ortungseinheit in das Gehäuse einer Fahrradbeleuchtung integriert ist. Die Anordnung der Ortungseinheit im Gehäuse einer Fahrzeugbeleuchtung ist dahingehend von Vorteil, dass diese einfach zu montieren ist und auch nachgerüstet werden kann. Zudem sind die Energieversorgung und die Wartung der Ortungseinheit unproblematisch. Ferner ist die Ortungseinheit von außen für Diebe nur bedingt oder gar nicht erkennbar. Ein Nachteil besteht allerdings darin, dass die Ortungseinheit zusammen mit der Fahrradbeleuchtung von einem Dieb in einfacher Weise entfernt oder zerstört werden kann, wenn dieser ihre Position kennt.

Die DE 20 2008 009 614 U1 schlägt vor, die Ortungseinheit in das Rohr einer Fahrrad-Sattelstütze zu integrieren. Aber auch hier können Diebe die Ortungseinheit zusammen mit der Fahrrad-Sattelstütze ohne weiteres entfernen oder die Ortungseinheit zerstören.

Weitere Fahrrad-Diebstahlschutz-Systeme sind in den Druckschriften EP 3 018 044 A1 und DE 10 2009 033 475 A1 beschrieben. Die DE 10 2009 033 475 A1 offenbart die Präambel der Ansprüche 1 und 10.

Ausgehend von diesem Stand der Technik ist es eine Aufgabe der vorliegenden Erfindung, ein Fahrzeug der eingangs genannten Art mit alternativem Aufbau zu schaffen, der die zuvor beschriebenen Probleme zumindest teilweise behebt.

Zur Lösung dieser Aufgabe schafft die vorliegende Erfindung ein Fahrzeug nach Anspruch 1. Die erfindungsgemäße Anordnung der Ortungseinheit innerhalb des hohl ausgebildeten Tretlagers ist dahingehend von Vorteil, dass sich die Ortungseinheit sowohl bei der Herstellung des Fahrzeugs als auch nachträglich montieren lässt. Auch ist die Ortungseinheit von außen nicht sichtbar, so dass potentielle Diebe auf diese nicht aufmerksam werden. Zudem handelt es sich bei dem Tretlager um ein schwer demontierbares Bauteil des Fahrzeugs, weshalb sich die Ortungseinheit nur mit geeignetem Werkzeug und hohem Zeitaufwand zusammen mit dem Tretlager entfernen lässt.

Bevorzugt ist auch die Energieversorgungseinrichtung innerhalb des Hohlraums angeordnet, wodurch sich ein kompakter und einfacher Aufbau ergibt. Die Energieversorgungseinrichtung und die Ortungseinheit können dabei integral ausgebildet, beispielsweise in einem gemeinsamen Gehäuse angeordnet sein.

Erfindungsgemäß sind die Ortungseinheit und das Tretlager derart miteinander verbunden, dass sich die Ortungseinheit nicht zerstörungsfrei von dem Tretlager lösen lässt. Entsprechend kann die Ortungseinheit nicht aus dem Tretlager entnommen werden.

Bevorzugt sind die Ortungseinheit und das Tretlager miteinander verpresst und/oder verschweißt und/oder verlötet und/oder verklebt und/oder mechanisch über ein zerstörtes Gewinde und/oder eine Rastverbindung aneinander befestigt, um nur einige Beispiele zu nennen.

Die Energieversorgungseinrichtung ist vorteilhaft in Form eines Akkumulators vorgesehen. Entsprechend kann die Energieversorgungseinrichtung aufgeladen werden.

Die Energieversorgungseinrichtung ist bevorzugt derart ausgebildet, dass sie induktiv aufladbar ist. Alternativ oder zusätzlich kann die Energieversorgungseinrichtung eine oder mehrere Ladekabelsteckerbuchsen aufweisen, die derart angeordnet ist, dass sie von außen zugänglich ist. Entsprechend lässt sich die Energieversorgungseinrichtung problemlos von außen aufladen.

Gemäß einer Ausgestaltung der vorliegenden Erfindung weist die Ortungseinheit ein Gehäuse auf, das die Außenseite der Ortungseinheit definiert.

Dies erleichtert die Handhabung und den Einbau der Ortungseinheit, so dass sich diese auch von einem Endnutzer installieren lässt. Alternativ kann das Gehäuse aber auch durch das Tretlager definiert werden.

Bevorzugt ist das Gehäuse endseitig mit zumindest einer Kappe verschlossen.

Die zumindest eine Kappe kann abnehmbar ausgebildet sein, um beispielsweise den Zugang zu der Ladekabelsteckerbuchse freizugeben, wenn eine solche vorgesehen ist.

Alternativ kann die zumindest eine Kappe aber auch derart befestigt sein, dass sie sich nicht zerstörungsfrei von dem Gehäuse lösen lässt. Ist in diesem Fall eine Ladekabelsteckerbuchse vorhanden, so muss diese von außen durch die Kappe hindurch zugänglich sein.

Gemäß einer Ausgestaltung der vorliegenden Erfindung ist eine Antenne der Ortungseinheit unmittelbar benachbart zu der zumindest einen Kappe angeordnet oder in die Kappe integriert, um ein ordnungsgemäßes Senden und Empfangen von Signalen zu gewährleisten. Die Kappe kann zusätzlich mit einer Durchgangsöffnung versehen sein, um den Signalaustausch weiter zu verbessern.

Zur Lösung der eingangs genannten Aufgabe schafft die vorliegende Erfindung ferner ein Tretlager nach Anspruch 10.

Bevorzugt ist in das Tretlager ferner eine mit der Ortungseinheit verbundene Energieversorgungseinrichtung angeordnet, die integral mit der Ortungseinheit ausgebildet, beispielsweise in einem gemeinsamen Gehäuse angeordnet sein kann.

Weitere Merkmale und Vorteile der vorliegenden Erfindung werden anhand der nachfolgenden Beschreibung eines Fahrzeugs gemäß einer Ausführungsform der vorliegenden Erfindung unter Bezugnahme auf die beiliegende Zeichnung deutlich. Darin ist
- Figur 1: eine schematische Ansicht eines Fahrrad-Diebstahlschutz-Ortungssystems gemäß einer Ausführungsform der vorliegenden Erfindung, das von einer an einem Fahrrad angeordneten Ortungseinheit erfasste Positionsdaten empfängt und an ein Endgerät eines Nutzers weiterleitet;
- Figur 2: eine schematische perspektivische Ansicht eines Tretkurbelantriebs des in Figur 1 dargestellten Fahrrads sowie einer Ortungseinheit gemäß einer Ausführungsform der vorliegenden Erfindung, die einen Teil des in Figur 1 dargestellten Fahrrad-Diebstahlschutz-Ortungssystems bildet, und

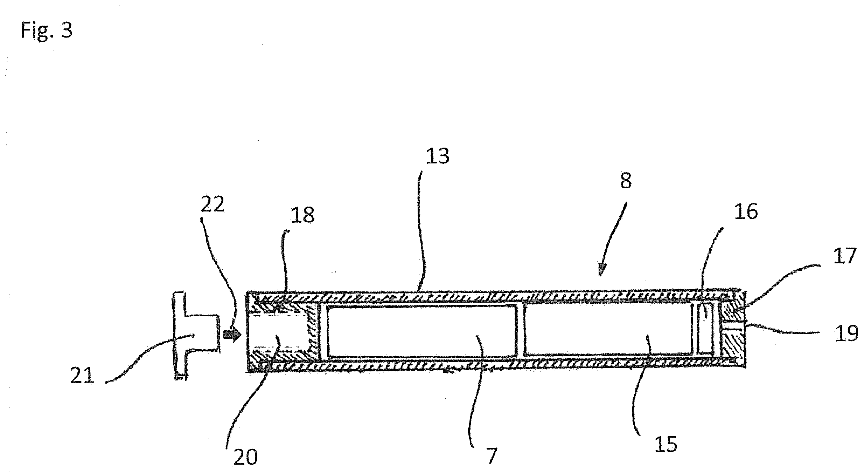

- Figur 3: eine schematische Schnittansicht der in Figur 2 dargestellten Ortungseinheit.

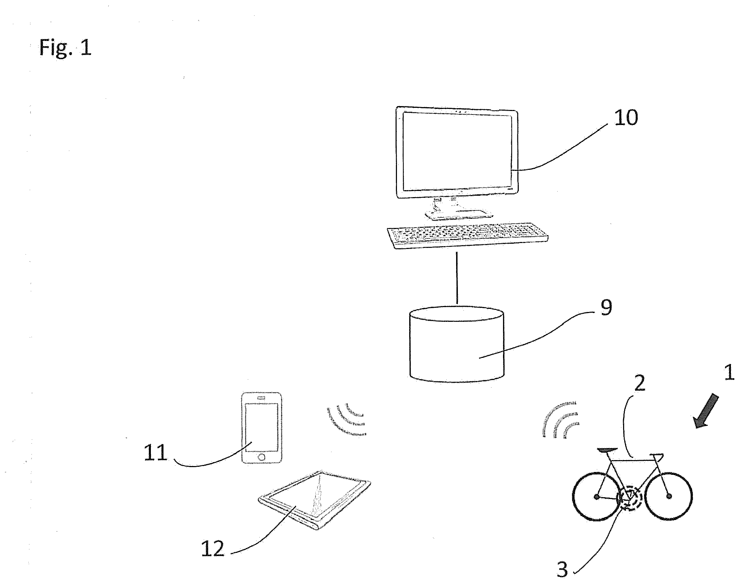

Figur 1 zeigt ein Fahrzeug 1 gemäß einer Ausführungsform der vorliegenden Erfindung, bei dem es sich vorliegend um ein Fahrrad handelt. Das Fahrzeug 1 umfasst einen Rahmen 2 und einen Tretkurbelantrieb 3, der ein an dem Rahmen 2 gehaltenes Tretlager 4 und zwei an dem Tretlager 4 befestigte Tretkurbelarme 5 und 6 aufweist, wobei das Tretlager 4 einen von außen zugänglichen zylindrischen Hohlraum 4a definiert, der sich durch das Tretlager 4 hindurch erstreckt. Ferner umfasst das Fahrzeug 1 eine Energieversorgungseinrichtung 7 und eine mit dieser verbundene Ortungseinheit 8, die innerhalb des Hohlraums 4a des Tretlagers 4 angeordnet sind und einen Teil eines Fahrrad-Diebstahlschutz-Ortungssystems bilden. Weitere Bestandteile des Fahrrad-Diebstahlschutz-Ortungssystems sind vorliegend ein mit einer Datenbank 9 verbundener Rechner 10 sowie zumindest ein Endgerät eines Nutzers, beispielswiese in Form eines Smartphones 11 und/oder Tablet-PCs 12.

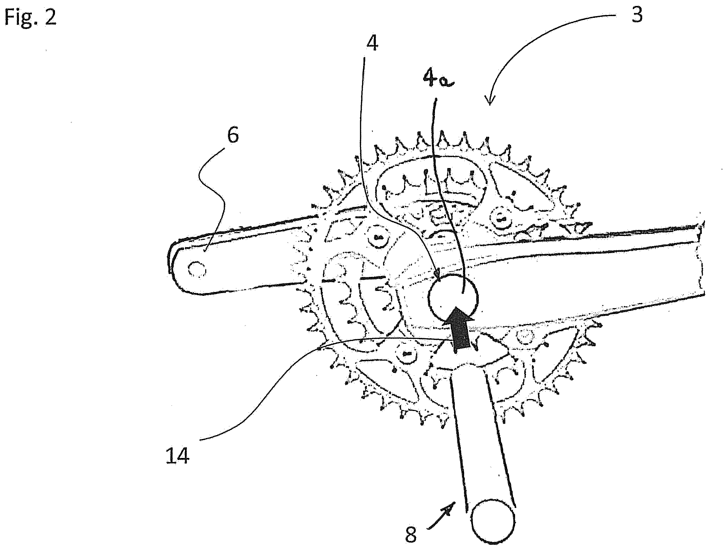

Die Ortungseinheit 8 umfasst ein rohrförmiges Gehäuse 13, dessen Außenabmessungen derart gewählt sind, dass das Gehäuse 13 in dem Hohlraum 4a des Tretlagers 4 eingesetzt werden kann, wie es in Figur 2 schematisch durch den Pfeil 14 angedeutet ist. Innerhalb des Gehäuses 13 sind die Energieversorgungseinrichtung 7, eine mit der Energieversorgungseinrichtung 7 elektrisch verbundene GPS- und GSM-Einrichtung 15 mit optionaler zusätzlicher Bluetooth-Übertragungstechnik und eine mit der GPS- und GSM-Einrichtung 15 elektrisch verbundene Antenne 16 angeordnet. Die freien Enden des Gehäuses 13 sind mit Kappen 17 und 18 verschlossen, die vorliegend fest mit dem Gehäuse 13 verbunden, vorliegend verklebt sind, um die innerhalb des Gehäuses 13 angeordneten Komponenten vor einem unerwünschten Zugriff Dritter zu schützen. Grundsätzlich können die Kappen 17 und 18 aber auch lösbar an dem Gehäuse 13 gehalten sein. Die Kappe 17, die benachbart zur Antenne 16 angeordnet ist, ist mit einer Durchgangsöffnung 19 versehen, die mit einem nicht-metallischen Werkstoff gefüllt sein kann, beispielsweise mit Kunststoff oder Gummi. Die Durchgangsöffnung 19 soll den Empfang der Antenne 16 verbessern. In die Kappe 18 ist eine von außen zugängliche und elektrisch mit der Energieversorgungseinrichtung 7 verbundene Ladekabelsteckerbuchse 20 in Form eines USB-Steckers integriert. Die Ladekabelsteckerbuchse 20 kann von außen mit einem aus Gummi hergestellten Stöpsel 21 verschlossen werden, der lösbar in die Ladekabelsteckerbuchse 20 in Richtung des Pfeils 22 eingesetzt werden kann und die Ladekabelsteckerbuchse 20 im eingesetzten Zustand staub- und wasserdicht verschließt.

Die Ortungseinheit 8 und das Tretlager 4 sind derart miteinander verbunden, dass sich die Ortungseinheit 8 nicht zerstörungsfrei von dem Tretlager 4 lösen lässt. Vorliegend ist hierzu das Gehäuse 13 mit dem Tretlager 4 verklebt. Alternativ können das Gehäuse 13 der Ortungseinheit 8 und das Tretlager 4 aber auch miteinander verpresst, verschweißt, verlötet oder auf mechanische Weise untrennbar miteinander verbunden sein. So kann das Gehäuse 13 der Ortungseinheit 8 beispielsweise mit dem Tretlager 4 über ein zerstörtes Gewinde verbunden sein. Alternativ sind auch Rastverbindungen denkbar, die ihre Wirkung entfalten, sobald das Gehäuse 13 ordnungsgemäß in den Hohlraum 4a des Tretlagers 4 eingesetzt ist, wie beispielsweise Schnappverbindungen oder dergleichen.

Während des Betriebs des Fahrrad-Diebstahlschutz-Ortungssystems empfängt die GPS- und GSM-Einrichtung 15 über die Antenne 16 GPS-Signale, die beispielsweise von verschiedenen Satelliten ausgesendet werden. Anhand dieser Signale kann die GPS- und GSM-Einrichtung 15 aktuelle Positionsdaten der Ortungseinheit 8 und damit des Fahrzeugs 1 generieren. Diese Positionsdaten sendet die mit einer SIM-Karte versehene GPS- und GSM-Einrichtung 15 über die Antenne 16 an den Rechner 10, vorliegend über ein Mobilfunknetz, der die empfangenen Daten an das Smartphone 11 und/oder an den Tablet-PC 12 eines Nutzers weiterleitet. Dieser ist damit in der Lage, den aktuellen Standort seines Fahrzeugs 1 abzufragen, sollte dieses beispielsweise gestohlen worden sein. Die Kommunikation zwischen der Ortungseinheit 8, dem Rechner 10 und dem Endgerät des Nutzers kann kontinuierlich, in regelmäßigen zeitlichen Abständen, bei Eintreten bestimmter Ereignisse oder auf Anfrage des Nutzers erfolgen. Grundsätzlich ist es auch möglich, auf den Rechner 10 zu verzichten, so dass die Kommunikation direkt zwischen der Ortungseinheit 8 und dem Endgerät des Benutzers erfolgt.

Die Ortungseinheit 8 kann derart ausgebildet sein, dass sie von dem Benutzer aktiviert und deaktiviert werden kann. Die Aktivierung bzw. Deaktivierung kann beispielsweise über einen induktiven Schlüssel-Chip oder per Bluetooth über das Endgerät des Benutzers erfolgen.

Ferner kann die Ortungseinheit 8 über einen Bewegungssensor verfügen, der, sobald er eine Bewegung detektiert, ein Signal generiert, das in Form eines Warnsignals an das Endgerät des Benutzers übermittelt wird. In diesem Fall wird der Benutzer unmittelbar über eine ungeplante Bewegung des Fahrzeugs 1 unterrichtet.

Zum Aufladen der Energieversorgungseinrichtung 7 kann der Nutzer den Stöpsel 21 von außen lösen und ein Ladekabel in die Ladekabelsteckerbuchse 20 einstecken, das mit einer externen Energiequelle verbunden ist. An dieser Stelle sei darauf hingewiesen, dass anstelle eines Ladekabels grundsätzlich auch auf eine andere Ladetechniken zurückgegriffen werden kann. So kann das Aufladen der Energieversorgungseinrichtung 7 auch induktiv erfolgen, um nur ein Beispiel zu nennen. Ebenso ist es grundsätzlich möglich, die Energieversorgungseinrichtung 7 mit einer nicht aufladbaren Energiequelle zu versehen, auch wenn eine solche Ausgestaltung nicht bevorzugt wird. Die Energieversorgungseinrichtung 7 kann, auch wenn dies vorliegend nicht dargestellt ist, mit einer Leuchte versehen sein, die den aktuellen Ladestatus anzeigt.

## Patentansprüche

1. Fahrzeug (1), insbesondere Fahrrad, mit einem Rahmen (2), einem Tretkurbelantrieb (3), der ein an dem Rahmen (2) gehaltenes Tretlager (4) und zwei an dem Tretlager (4) befestigte Tretkurbelarme (5, 6) aufweist, einer Energieversorgungseinrichtung (7) und einer mit dieser verbundenen Ortungseinheit (8), die einen Bestandteil eines Fahrrad-Diebstahlschutz-Ortungssystems bildet, **dadurch gekennzeichnet, dass** das Tretlager (4) einen von außen zugänglichen, sich durch das Tretlager (4) hindurch erstreckenden zylindrischen Hohlraum (4a) aufweist, dass die Orrungseinheit (8) ein rohrförmiges Gehäuse (13) aufweist, und dass zumindest die Ortungseinheit (8) innerhalb des Hohlraums (4a) angeordnet ist, wobei die Ortungseinheit (8) und das Tretlager (4) derart miteinander verbunden sind, dass sich die Ortungseinheit (8) nicht zerstörungsfrei von dem Tretlager (4) lösen lässt.

2. Fahrzeug (1) nach Anspruch 1, **dadurch gekennzeichnet, dass** die Energieversorgungseinrichtung (7) innerhalb des Hohlraums (4a) angeordnet ist, wobei die Energieversorgungseinrichtung (7) und die Ortungseinheit (4) integral ausgebildet sein können.

3. Fahrzeug (1) nach einem der vorhergehenden Ansprüche, **dadurch gekennzeichnet, dass** die Ortungseinheit (8) und das Tretlager (4) miteinander verpresst und/oder verschweißt und/oder verlötet und/oder verklebt und/oder mechanisch über ein zerstörtes Gewinde und/oder eine Rastverbindung aneinander befestigt sind.

4. Fahrzeug (1) nach einem der vorhergehenden Ansprüche, **dadurch gekennzeichnet, dass** die Energieversorgungseinrichtung (7) in Form eines Akkumulators vorgesehen ist.

5. Fahrzeug (1) nach Anspruch 4, dass die Energieversorgungseinrichtung (7) derart ausgebildet ist, dass sie induktiv aufladbar ist, und/oder dass die Energieversorgungseinrichtung (7) eine oder mehrere Ladekabelsteckerbuchsen (20) aufweist, die derart angeordnet ist, dass sie von außen zugänglich ist.

6. Fahrzeug (1) nach einem der vorhergehenden Ansprüche, **dadurch gekennzeichnet, dass** die Ortungseinheit (8) ein Gehäuse (13) aufweist, das die Außenseite der Ortungseinheit (8) definiert.

7. Fahrzeug (1) nach Anspruch 6, **dadurch gekennzeichnet, dass** das Gehäuse (13) der Ortungseinheit (8) endseitig mit zumindest einer Kappe (17, 18) verschlossen ist.

8. Fahrzeug (1) nach Anspruch 7, **dadurch gekennzeichnet, dass** die zumindest eine Kappe (17, 18) derart befestigt ist, dass sie sich nicht zerstörungsfrei von dem Gehäuse (13) lösen lässt.

9. Fahrzeug (1) nach Anspruch 7 oder 8, **dadurch gekennzeichnet, dass** eine Antenne (16) der Ortungseinheit (8) innerhalb des Gehäuses (13) und unmittelbar benachbart zu der zumindest einen Kappe (17, 18) angeordnet oder in die Kappe integriert ist.

10. Tretlager (4), **dadurch gekennzeichnet, dass** dieses einen von außen zugänglichen, sich durch das Tretlager (4) hindurch erstreckenden zylindrischen Hohlraum (4a) aufweist, in dem eine Ortungseinheit (8) mit einem rohrförmigen Gehäuse (13) angeordnet ist, wobei die Ortungseinheit (8) und das Tretlager (4) derart miteinander verbunden sind, dass sich die Ortungseinheit (8) nicht zerstörungsfrei von dem Tretlager (4) lösen lässt.

11. Tretlager (4) nach Anspruch 10, **dadurch gekennzeichnet, dass** in dem Hohlraum (4a) eine mit der Ortungseinheit (8) verbundene Energieversorgungseinrichtung (7) angeordnet ist.

## Claims

1. Vehicle (1), in particular a bicycle, having a frame (2), a pedal crank drive (3) which has a bottom bracket (4) which is held on the frame (2) and two pedal crank arms (5, 6) which are fastened to the bottom bracket (4), a power supply device (7) and a locating unit (8) which is connected to the power supply device (7) and forms part of a bicycle anti-theft locating system, **characterized in that** the bottom bracket (4) has an externally accessible cavity (4a) extending through the bottom bracket (4), **in that** the locating unit (8) has a tubular housing (13), and **in that** at least the locating unit (8) is arranged inside the cavity (4a), the locating unit (8) and the bottom bracket (4) being connected to one another in such a way that the locating unit (8) cannot be detached from the bottom bracket (4) in a non-destructive manner.

2. Vehicle (1) according to claim 1, **characterized in that** the power supply device (7) is arranged inside the cavity (4a), wherein the power supply device (7) and the locating unit (4) can be integrally formed.

3. Vehicle (1) in accordance with one of the preceding claims, **characterized in that** the locating unit (8) and the bottom bracket (4) are pressed and/or welded and/or brazed and/or glued and/or mechanically fastened to one another via a destroyed thread and/or a latching connection.

4. Vehicle (1) according to one of the preceding claims, **characterized in that** the power supply device (7) is provided in the form of an accumulator.

5. Vehicle (1) according to claim 4, **characterized in that** the power supply device (7) is designed in such a way that it can be charged inductively, and/or **in that** the power supply device (7) has one or more charging cable plug sockets (20) which are arranged in such a way that they are accessible from the outside.

6. Vehicle (1) according to one of the preceding claims, **characterized in that** the locating unit (8) comprises a housing (13) defining the outside of the locating unit (8).

7. Vehicle (1) according to claim 6, **characterized in that** the housing (13) of the locating unit (8) is closed at the end with at least one cap (17, 18).

8. Vehicle (1) according to claim 7, **characterized in that** the at least one cap (17, 18) is fastened in such a way that it cannot be detached from the housing (13) in a non-destructive manner.

9. Vehicle (1) according to claim 7 or 8, **characterized in that** an antenna (16) of the locating unit (8) is arranged inside the housing (13) and immediately adjacent to the at least one cap (17, 18) or integrated into the cap.

10. Bottom bracket (4), **characterized in that** it has a cylindrical cavity (4a) which is accessible from the outside and extends through the bottom bracket (4) and in which a locating unit (8) with a tubular housing (13) is arranged, the locating unit (8) and the bottom bracket (4) being connected to one another in such a way that the locating unit (8) cannot be detached from the bottom bracket (4) in a non-destructive manner.

11. Bottom bracket (4) according to claim 10, **characterized in that** an energy supply device (7) connected to the locating unit (8) is arranged in the cavity (4a).

## Revendications

1. Véhicule (1), en particulier une bicyclette, comprenant un cadre (2), un entraînement de pédalier (3) qui présente un pédalier (4) qui est maintenu sur le cadre (2) et deux bras de pédalier (5, 6) qui sont fixés sur le pédalier (4), un dispositif d'alimentation (7) et une unité de positionnement (8) qui est reliée au dispositif d'alimentation (7) et fait partie d'un système antivol, **caractérisé en ce que** le pédalier (4) présente une cavité accessible de l'exterieur et s'étendant à travers le pédalier (4), **en ce que** l'unité de positionnement (8) présente un boîtier tubulaire (13), et **en ce qu'**au moins l'unité de positionnement (8) est disposée dans la cavité (4a), l'unité de positionnement (8) et le pédalier (4) étant reliés entre eux de telle manière que l'unité de positionnement (8) ne soit pas démontable de manière non destructive du pédalier (4).

2. Véhicule (1) selon la revendication 1, **caractérisé en ce que** le dispositif d'alimentation (7) est disposé à l'intérieur de la cavité (4a), le dispositif d'alimentation (7) et l'unité de positionnement (4) pouvant être intégrés.

3. Véhicule (1) selon l'une des revendications précédentes, **caractérisé en ce que** l'unité de positionnement (8) et le pédalier (4) sont pressés et/ou soudés et/ou brasés et/ou collés et/ou fixés mécaniquement entre eux par un filetage détruit et/ou une liaison à verrouillage.

4. Véhicule (1) selon l'une des revendications précédentes, **caractérisé en ce que** le dispositif d'alimentation (7) est prévu sous la forme d'un accumulateur.

5. Véhicule (1) selon la revendication 4, **caractérisé en ce que** le dispositif d'alimentation (7) est conçu de telle sorte qu'il puisse être chargé par induction, et/ou **en ce que** le dispositif d'alimentation (7) comporte une ou plusieurs prises (20) de câbles de chargement qui sont disposées de telle sorte qu'elles soient accessibles de l'extérieur.

6. Véhicule (1) selon l'une des revendications précédentes, **caractérisé en ce que** l'unité de localisation (8) comprend un boîtier (13) définissant l'extérieur de l'unité de localisation (8).

7. Véhicule (1) selon la revendication 6, **caractérisé en ce que** le boîtier (13) de l'unité de positionnement (8) est fermé à son extrémité par au moins un couvercle (17, 18).

8. Véhicule (1) selon la revendication 7, **caractérisé en ce que** le au moins un couvercle (17, 18) est fixé de telle sorte qu'il ne puisse pas être détaché du boîtier (13) de manière non destructive.

9. Véhicule (1) selon la revendication 7 ou 8, **caractérisé en ce qu'**une antenne (16) de l'unité de positionnement (8) est disposée à l'intérieur du boîtier (13) et immédiatement adjacente à l'au moins un couvercle (17, 18) ou intégrée au couvercle.

10. Pédalier (4), **caractérisé en ce qu'**il présente une cavité cylindrique (4a) accessible de l'extérieur qui s'étend à travers le pédalier (4) et dans laquelle est disposée une unité de positionnement (8) avec un boîtier tubulaire (13), l'unité de positionnement (8) et le pédalier (4) étant reliés entre eux de telle façon que l'unité de positionnement (8) ne puisse être séparée du jeu de pédalier (4) de manière non destructive.

11. Pédalier (4) selon la revendication 10, **caractérisé en ce qu'**un dispositif d'alimentation en énergie (7) relié à l'unité de positionnement (8) est disposé dans la cavité (4a).
